# EUROPEAN PATENT APPLICATION

(11) **EP 4 659 892 A1**
(43) Date of publication of application: **10.12.2025**
(21) Application number: 24750289.1
(22) Date of filing: 30.01.2024
(51) Int. Cl.: B23K 26/142, B23K 26/21, H02K 15/04

(54) **LASER WELDING DEVICE, AND LASER WELDING METHOD**

(30) Priority: 31.01.2023 JP 2023012430
(71) Applicant: FURUKAWA ELECTRIC CO., LTD., Tokyo 100-8322 (JP); NITTOKU Co., Ltd., Saitama-city, Saitama 3300841 (JP)
(72) Inventor: KADOWAKI, Hiroto, Saitama-city, Saitama 330-0841 (JP); TSURUDA, Shuma, Saitama-city, Saitama 330-0841 (JP); SEGAWA, Masayoshi, Saitama-city, Saitama 330-0841 (JP); MURAYAMA, Taro, Tokyo 100-8322 (JP); SHIGEMATSU, Takashi, Tokyo 100-8322 (JP); YASUOKA, Tomomichi, Tokyo 100-8322 (JP)
(74) Representative: Grünecker Patent- und Rechtsanwälte PartG mbB
(86) International application number: PCT/JP2024/002842
(87) International publication number: WO 2024/162340

(57) **Abstract**

A laser welding apparatus (20) includes: a fixing tool (22) configured to fix a welding target workpiece (11); and a laser irradiation device (30) configured to melt welding required parts (10) of the welding target workpiece (11) by laser light emitted from a laser head (31), the fixing tool (22) being configured to be capable of fixing the welding target workpiece (11) such that the welding required parts (10) are arranged linearly in plural numbers in a consecutive manner at predetermined intervals, and the laser irradiation device (30) being configured to successively melt the plurality of welding required parts (10) by changing an emission angle of the laser light emitted from the laser head (31), wherein the laser welding apparatus (20) further includes an inert-gas nozzle (41) configured to simultaneously blow inert gas onto all of the plurality of linearly consecutive welding required parts (10).

## Description

### TECHNICAL FIELD

The present invention relates to a laser welding apparatus and a laser welding method for welding by irradiating laser light.

### BACKGROUND ART

As means for welding a welding required part of a welding target workpiece, a laser welding apparatus that performs welding by irradiating laser light is known. In the laser welding apparatus described in JP7-171690A, oxidation of the portion being welded is prevented by avoiding the metal melted by the laser irradiation from contacting with air by covering a laser emission port of a laser head with an outer cylinder, and by supplying nitrogen gas to the inside of the outer cylinder to blow nitrogen gas to a welding part from around the emission port.

As the welding target workpiece to be welded by such a welding apparatus that emits the laser light, rotating electrical machines such as motors, generators, motor generators, and so forth used in electric vehicles, etc. are known. The stator of the rotating electrical machine described in JP2022-36296A is manufactured by arranging the coils in the stator core, and in order to achieve a relatively large torque, the rectangular wire having a substantially rectangular cross-sectional shape is used for the coils.

In the manufacturing process of the rotating electrical machine, the welding apparatus is used for manufacturing the coils. The rectangular wire is formed into a wave shape in advance such that it can be arranged in the stator core. A plurality of coil segments each having the wave shape are arranged in the stator core in advance, and a single coil is formed by connecting end portions of the plurality of coil segments to achieve electrical conduction. The connection of the end portions of the coil segments is performed by welding using laser light.

### SUMMARY OF INVENTION

As in the laser welding apparatus described in JP7-171690A, when the laser welding apparatus employs a so-called XY laser, in which the laser head is moved to the welding part and emits the laser light, it is effective to cover the laser emission port with the outer cylinder. However, when a so-called galvano laser, in which the emission angle of the laser light to be emitted from the laser head can be changed without moving the laser head, is employed, because an irradiation range of the laser is wide, it is difficult to provide the outer cylinder that covers the entire irradiation range of the laser light, and it is difficult to blow shield gas from around the laser light.

Especially, in a case in which the welding target workpiece is the rotating electrical machine to be installed in electric vehicles, etc., because, in a state in which a relatively large number of coil segments are mounted on the stator core, the end portions of the coil segments, which are consecutively arranged in the radial direction of the stator core, are welded successively, it is required to repeatedly perform rapid welding, and so, the galvano laser, with which the welding is performed by changing the emission angle of the laser light, needs to be used.

For this reason, even in a case in which the galvano laser is employed, there is an expectation for technological developments to prevent oxidation of the welding part during welding.

An object of the present invention is to provide a laser welding apparatus and a laser welding method capable of preventing oxidation of a welding part during welding.

According to one aspect of the present invention, a laser welding apparatus includes: a fixing tool configured to fix a welding target workpiece; and a laser irradiation device configured to melt welding required parts of the welding target workpiece by laser light emitted from a laser head, the fixing tool being configured to be capable of fixing the welding target workpiece such that the welding required parts are arranged linearly in plural numbers in a consecutive manner at predetermined intervals, and the laser irradiation device being configured to successively melt the plurality of welding required parts by changing an emission angle of the laser light emitted from the laser head, wherein the laser welding apparatus further comprises an inert-gas nozzle configured to simultaneously blow inert gas onto all of the plurality of linearly consecutive welding required parts.

According to another aspect of the present invention, a laser welding method includes a step of welding a plurality of welding required parts arranged linearly in a consecutive manner by successively irradiating laser light to the plurality of welding required parts in a state in which inert gas is simultaneously blown onto all of the plurality of welding required parts.

### BRIEF DESCRIPTION OF DRAWINGS

[FIG. 1] FIG. 1 is a sectional view showing a laser welding apparatus according to an embodiment of the present invention and is a sectional view taken along a line A-A in FIG. 8.
[FIG. 2] FIG. 2 is a sectional view taken along a line B-B in FIG. 1.
[FIG. 3] FIG. 3 is a sectional view taken along a line E-E in FIG. 1.
[FIG. 4] FIG. 4 is a sectional view taken along a line C-C in FIG. 8.
[FIG. 5] FIG. 5 is a sectional view taken along a line D-D in FIG. 9 showing arrangement of welding required parts.
[FIG. 6] FIG. 6 is a front view showing a fixing tool in which a stator that is a welding target workpiece is supported.
[FIG. 7] FIG. 7 is a perspective view of the stator that is the welding target workpiece.
[FIG. 8] FIG. 8 is a front view of the laser welding apparatus according to the embodiment of the present invention.
[FIG. 9] FIG. 9 is a side view of the laser welding apparatus according to the embodiment of the present invention.
[FIG. 10] FIG. 10 is a diagram showing a state in which welding is performed by irradiating laser light to the welding required part that is located at the most downstream side among a plurality of consecutive welding required parts and is a diagram corresponding to FIG. 1.
[FIG. 11] FIG. 11 is a diagram showing a welding operation performed subsequent to the state shown in FIG. 10.
[FIG. 12] FIG. 12 is a diagram showing a welding operation performed subsequent to the state shown in FIG. 11.
[FIG. 13] FIG. 13 is a diagram showing a welding operation performed subsequent to the state shown in FIG. 12 and is a diagram showing a state in which welding is performed by irradiating the laser light to the welding required part that is located at the most upstream side among the plurality of consecutive welding required parts.

### DESCRIPTION OF EMBODIMENTS

In the following, an embodiment of the present invention will be described with reference to the drawings.

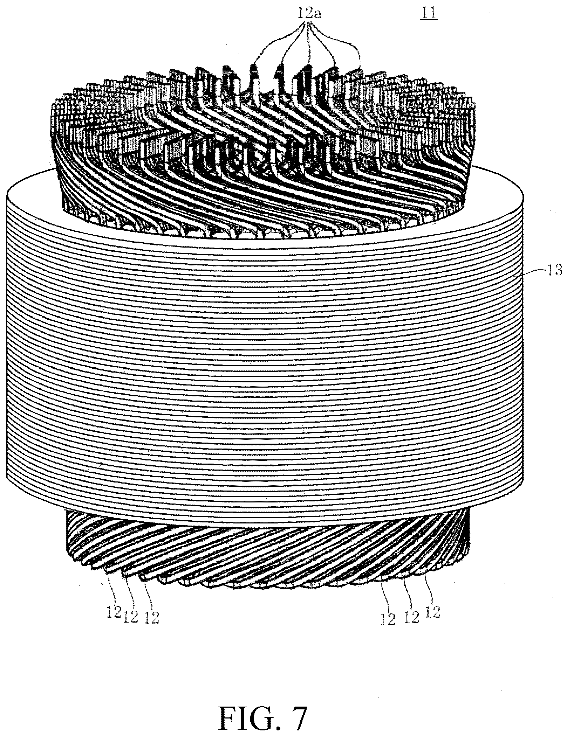

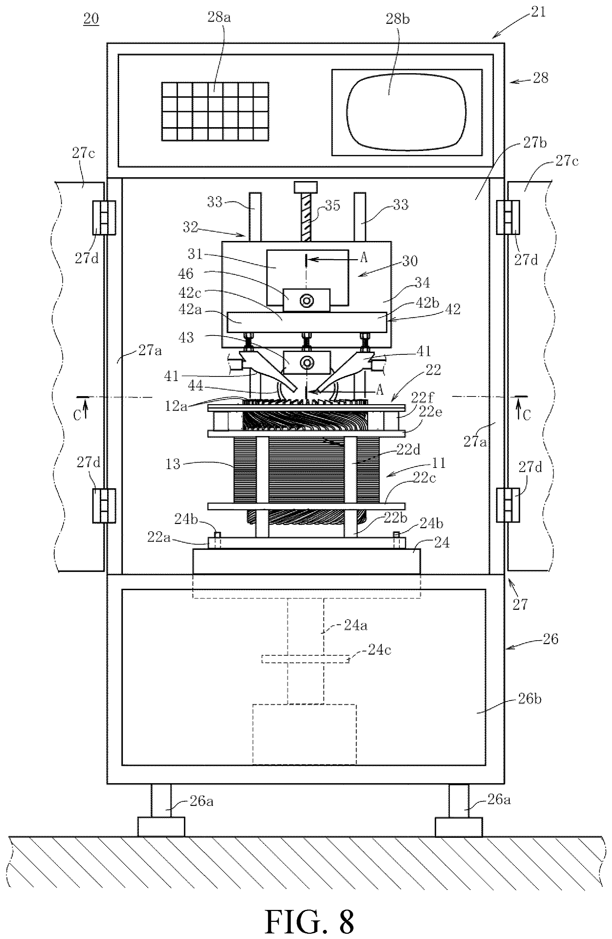

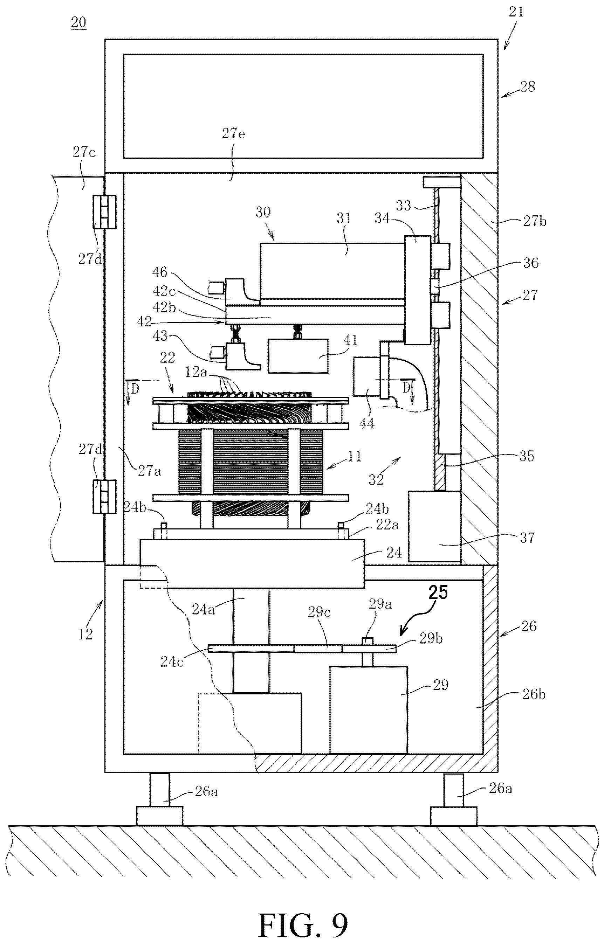

FIGs. 8 and 9 show a laser welding apparatus 20 according to the embodiment of the present invention. The laser welding apparatus 20 includes a fixing tool 22 serving as fixing means for fixing a welding target workpiece in a housing 21. The figures show a case in which the welding target workpiece in this embodiment is a stator 11 of a rotating electrical machine to be installed in electric vehicles, etc., and FIG. 7 shows an inner-rotor-type stator 11. Note that, in the present invention, the welding target workpiece is not limited to the stator 11.

The stator 11 is configured by arranging a plurality of coil segments 12 in a stator core 13. The plurality of coil segments 12 are each formed to have a wave shape such that a rectangular wire having a substantially rectangular cross-sectional shape can be inserted into each of slots. The slots are formed so as to extend in an inner circumference of the stator core 13 in the axial direction. The plurality of coil segments 12 respectively are inserted and arranged in the slots such that end portions 12a are positioned upward.

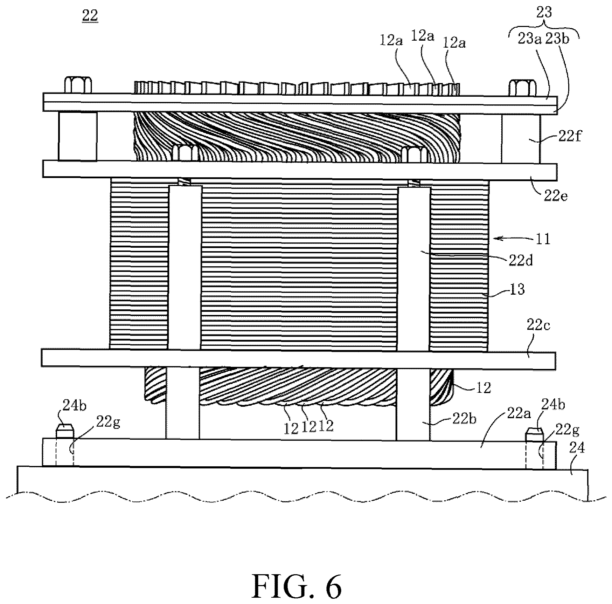

FIG. 6 shows the fixing tool 22 for fixing the stator 11 having the plurality of coil segments 12 and the stator core 13 to which the plurality of coil segments 12 are mounted. The fixing tool 22 supports and fixes the stator 11 such that the center axis of the stator 11 extends in the vertical direction.

The fixing tool 22 in this embodiment includes: a base plate 22a; a core support plate 22c that is provided on the base plate 22a via short support columns 22b and supports the stator core 13 from below by placing an end surface (a lower surface) of the stator core 13 on an upper surface of the core support plate 22c; a core pressing plate 22e that is provided on the core support plate 22c via intermediate support columns 22d and that clamps the stator core 13 with the core support plate 22c; and a holding plate 23 that is provided on the core pressing plate 22e via upper support columns 22f.

In a state in which the stator core 13 is clamped between the core support plate 22c and the core pressing plate 22e, the end portions 12a of the coil segments 12 arranged in the stator core 13 project upward from an upper surface of the stator core 13. The holding plate 23 holds and fixes the end portions 12a of the plurality of coil segments 12, which project out from above the stator core 13, such that the positions of the end portions 12a of the coil segments 12 can be determined and it is possible to weld the end portions 12a.

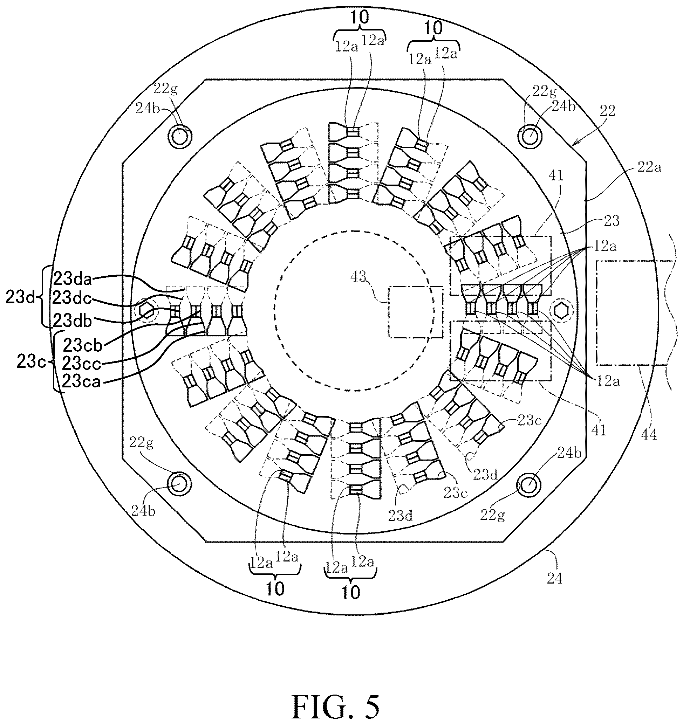

In the above, as shown in FIG. 7, in the stator 11 that is the welding target workpiece, the coil segments 12 are arranged in the stator core 13 in plural numbers in the circumferential direction and the coil segments 12 are arranged such that a plurality of coil segments 12 are overlapped also in the radial direction. A pair of end portions 12a that are arranged in an overlapped state form each of welding required parts 10 to be welded. As shown in FIG. 5, a plurality of welding required parts 10 (the pairs of end portions 12a) are arranged linearly in the radial direction passing through the center of the rotation of the stator 11 in a consecutive manner at predetermined intervals, and at the same time, the plurality of welding required parts 10, which are arranged in the radial direction in a consecutive manner, are also arranged consecutively in the circumferential direction. The holding plate 23 fixes all of the end portions 12a to be welded. As described above, the fixing tool 22 fixes the welding target workpiece such that the plurality of welding required parts 10 are arranged linearly in a consecutive manner at predetermined intervals.

The holding plate 23 includes two stacked plates: an upper holding plate 23a and a lower holding plate 23b (see FIG. 6). As shown in FIG. 5, the upper holding plate 23a and the lower holding plate 23b are respectively formed with holes 23c and holes 23d through which the pairs of end portions 12a of the coil segments 12 are respectively inserted in a overlapped state. Each of the holes 23c has a large hole 23ca whose width in the radial direction of the stator 11 is large, a small hole 23cb whose width in the radial direction of the stator 11 is smaller than that of the large hole 23ca, and a connecting hole 23cc that connects the large hole 23ca and the small hole 23cb. The holes 23d have the same shape as the holes 23c, and similarly to the holes 23c, each of the holes 23d has a large hole 23da, a small hole 23db, and a connecting hole 23dc. A plurality of holes 23c and a plurality of holes 23d are formed at predetermined intervals in the radial direction of the stator 11 and are also formed at predetermined intervals in the circumferential direction. The holes 23c and the holes 23d are formed to have opposite orientations to each other. FIG. 5 shows a state in which the small holes 23cb of the holes 23c and the small holes 23db of the holes 23d communicate with each other in the axial direction of the stator 11, and the pairs of end portions 12a, which are overlapped with each other, are respectively inserted through the small holes 23cb and the small holes 23db.

The upper holding plate 23a and the lower holding plate 23b are configured so as to be rotatable in mutually opposite directions. From a state in which one of the pair of end portions 12a is positioned in the large hole 23ca of the hole 23c in the upper holding plate 23a, and the other of the pair of end portions 12a is positioned in the large hole 23da of the hole 23d in the lower holding plate 23b, the upper holding plate 23a and the lower holding plate 23b are rotated in the mutually opposite directions. As a result, in the hole 23c in the upper holding plate 23a, the one of the pair of end portions 12a is guided from the connecting hole 23cc to the small hole 23cb and comes into contact with an end portion of the small hole 23cb. At the same time, in the hole 23d in the lower holding plate 23b, the other of the pair of end portions 12a is guided from the connecting hole 23dc to the small hole 23db and comes into contact with an end portion of the small hole 23db. As a result, as shown in FIG. 5, a state in which the pair of end portions 12a are inserted into the small hole 23cb and the small hole 23db is achieved, and thereby, the pair of end portions 12a come into close contact with each other, and the position of the pair of end portions 12a is fixed in the circumferential direction of the stator 11. In this way, a plurality of welding required parts 10 (the pairs of end portions 12a) are arranged consecutively in the radial direction of the stator 11 at predetermined intervals, and the plurality of welding required parts 10, which are arranged consecutively in the radial direction, are arranged consecutively also in the circumferential direction.

As shown in FIGs. 8 and 9, a rotating base 24, on which the fixing tool 22 is attached, is provided in the housing 21. The housing 21 includes: a lower main body 26, to which attachment legs 26a are attached to a lower part thereof, and that is surrounded by a peripheral wall 26b; a welding region portion 27 that is provided above the lower main body 26; and an upper main body 28 that is further provided above the welding region portion 27 and that has an operation panel 28a, a display 28b, and so forth, which are provided on a front face of the upper main body 28 (see FIG. 8).

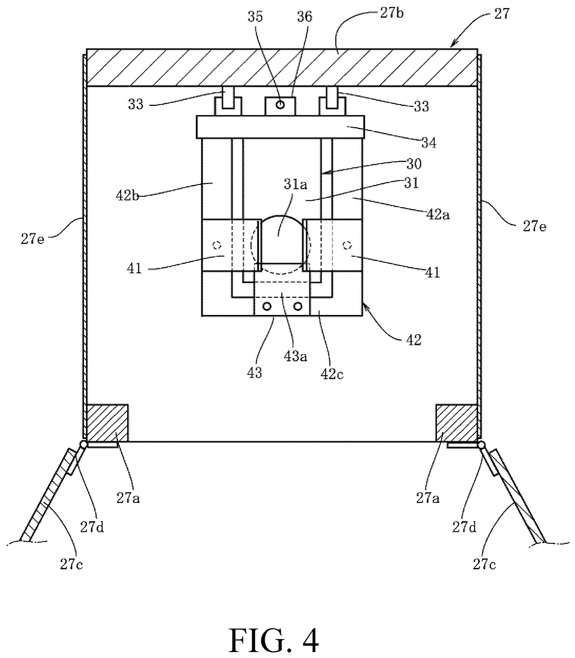

As shown in FIG. 9, the welding region portion 27 has a back plate 27b on its rear surface. The back plate 27b is erected on an upper part of a rear surface of the lower main body 26, and support columns 27a are erected on both sides of an upper part of a front face of the lower main body 26. A translucent resin door 27c is attached to the support columns 27a via hinges 27d, and the door 27c is configured to be able to open and close the space between the support columns 27a. As shown in FIG. 4, the spaces between a side surface of the back plate 27b and the support columns 27a are closed by translucent side walls 27e, and thereby, the welding region portion 27 is configured such that an interior thereof is visible.

As shown in FIG. 9, the rotating base 24 is horizontally attached to an upper end of a vertical shaft 24a, and the vertical shaft 24a is vertically supported inside the lower main body 26. The rotating base 24 is provided so as to be positioned at the boundary between the lower main body 26 and the welding region portion 27, and an upper surface of the rotating base 24 is formed to have a flat surface such that the base plate 22a of the fixing tool 22 can be placed thereon. On the upper surface of the rotating base 24, pins 24b for positioning the base plate 22a are provided so as to project upward.

As shown in FIG. 6, in the base plate 22a of the fixing tool 22, pin holes 22g through which the pins 24b are inserted are formed. By respectively inserting the pins 24b into the pin holes 22g in the base plate 22a, the fixing tool 22 is mounted at a correct position on the rotating base 24.

As shown in FIG. 9, the laser welding apparatus 20 in this embodiment includes a moving mechanism 25 serving as moving means for rotating the stator 11 together with the fixing tool 22. The moving mechanism 25 has: a motor 29 that is provided in the lower main body 26 so as to be adjacent to the rotating base 24; sprockets 24c and 29b that are provided on the vertical shaft 24a of the rotating base 24 and a rotating shaft 29a of the motor 29, respectively; and a chain 29c that connects the sprockets 24c and 29b.

When the motor 29 is driven and the rotating shaft 29a is rotated, the rotation is transmitted to the rotating base 24 via the chain 29c, and the fixing tool 22 mounted on the rotating base 24 and the stator 11 fixed to the fixing tool 22 are rotationally moved.

The fixing tool 22 is installed coaxially on the rotating base 24. By rotating the fixing tool 22 by the motor 29, the welding required parts 10, which are arranged consecutively in the circumferential direction, are moved in the circumferential direction.

The laser welding apparatus 20 includes a laser irradiation device 30. The laser irradiation device 30 has a laser head 31 that is attached above the fixing tool 22 and the stator 11. The laser irradiation device 30 melts the welding required part of the welding target workpiece by the laser light emitted from the laser head 31. The laser irradiation device 30 has a laser oscillator (not shown), a fiber serving as an optical path for transmitting the generated laser, and the laser head 31 in which a focusing system that focuses and emits the laser transmitted via the fiber is built.

In this embodiment, as shown in FIG. 9, a configuration in which the laser head 31 is attached via a lifting and lowering mechanism 32 serving as lifting and lowering means is illustrated. The lifting and lowering mechanism 32 will be described. To the back plate 27b in the welding region portion 27 of the housing 21, a pair of linear motion guide rails 33 are attached with a predetermined space in the width direction so as to extend in the vertical direction, and a lifting and lowering member 34 is attached to the linear motion guide rails 33 so as to be movable up and down.

As shown in FIGs. 4 and 9, between the pair of linear motion guide rails 33, a vertical rotating shaft 35 is rotatably provided in parallel with the pair of linear motion guide rails 33. An external thread is formed on a surface of the vertical rotating shaft 35, a vertical movement part 36 is threadedly engaged with the vertical rotating shaft 35 by means of a ball screw, and the vertical movement part 36 is attached to the lifting and lowering member 34.

As shown in FIG. 9, a vertical driving source 37 for rotationally driving the vertical rotating shaft 35 is arranged on the back plate 27b. As the vertical driving source 37, for example, a servomotor capable of high-precision control is used. By rotating the vertical rotating shaft 35 by the vertical driving source 37, the vertical movement part 36, which is threadedly engaged with the vertical rotating shaft 35, is lifted and lowered together with the lifting and lowering member 34.

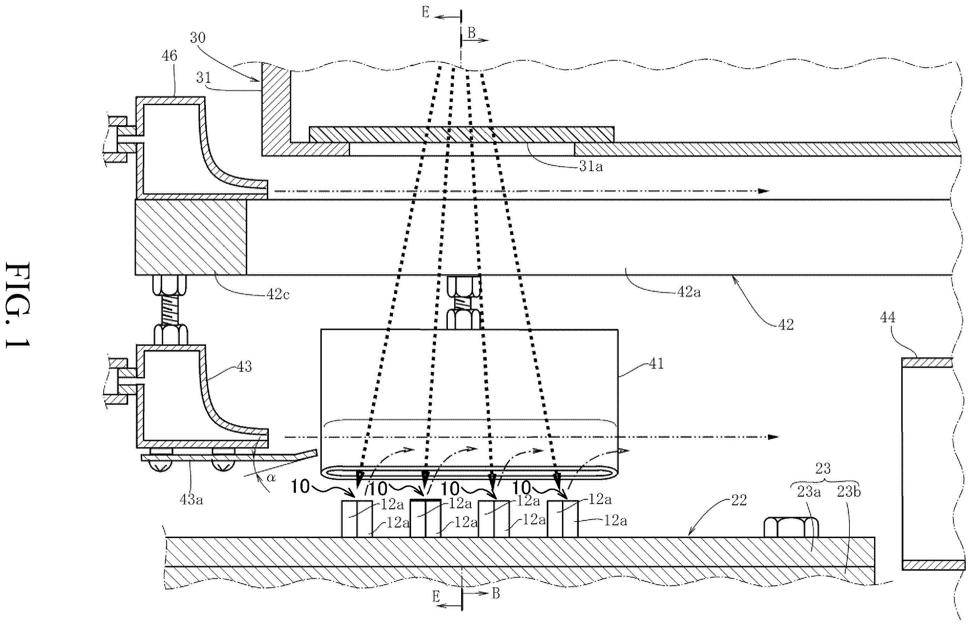

A housing of the laser head 31 has a box shape and is attached to the lifting and lowering member 34. In a lower surface of the laser head 31, an emission window 31a that allows the laser light to pass through is provided (see FIGs. 1 to 3). Inside the laser head 31, a reflector device is provided together with the focusing system.

The laser irradiation device 30 is capable of changing the emission direction in the laser head 31 by reflecting the laser light. As shown by the dotted arrows in FIG. 1, the laser irradiation device 30 is configured to move the laser light emitted from the laser head 31 in the radial direction of the fixing tool 22 so as to be able to successively weld the pairs of end portions 12a of the coil segments 12, which are the welding required parts 10 arranged next to each other in the radial direction.

As shown in FIGs. 1 to 4, the laser welding apparatus 20 includes inert-gas nozzle 41 that simultaneously blows inert gas onto all of the plurality of welding required parts 10, which are arranged linearly in a consecutive manner. In this embodiment, the inert-gas nozzles 41 are respectively provided, via attachment member 42, on both sides of the plurality of linearly consecutive welding required parts 10.

As shown in FIG. 4, the attachment member 42 is attached to the lifting and lowering member 34 below the laser head 31. The attachment member 42 is provided so as to surround the emission window 31a of the laser head 31. The attachment member 42 has side pieces 42a and 42b that are provided on both sides of the emission window 31a such that the emission window 31a is placed therebetween, and a connecting piece 42c that connects projecting ends of both of the side pieces 42a and 42b. Base ends of both of the side pieces 42a and 42b are attached to the lifting and lowering member 34.

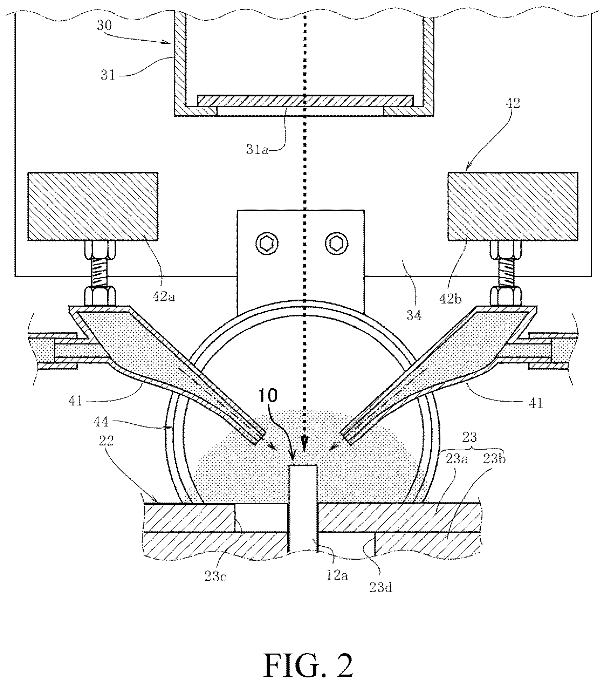

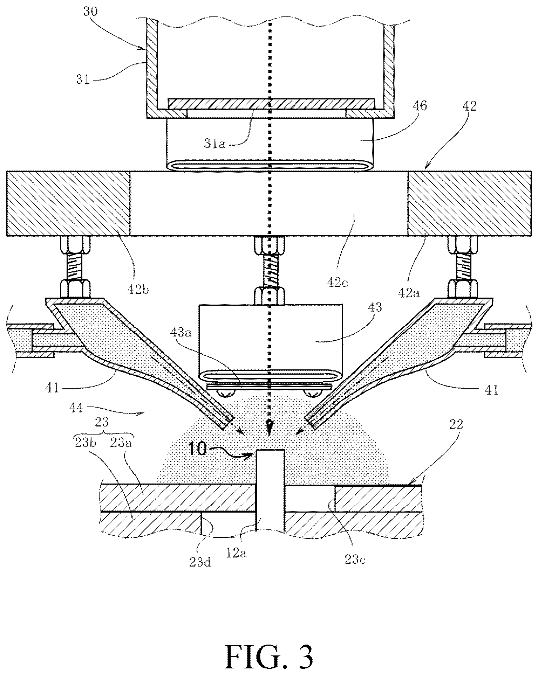

As shown in FIGs. 2 and 3, a pair of the inert-gas nozzles 41 are respectively provided on both of the side pieces 42a and 42b. The pair of the inert-gas nozzles 41 are provided so as to sandwich the plurality of welding required parts 10 from both sides, i.e. from both the upstream side and the downstream side in the rotating direction of the welding required parts 10 arranged in a linearly consecutive manner in the radial direction of the stator 11. The pair of the inert-gas nozzles 41 are provided such that discharge ports are provided at an obliquely inclined angle so as to be capable of respectively blowing the inert gas onto the welding required parts 10 from above at an obliquely angle.

In each of the pair of the inert-gas nozzles 41, the discharge port is formed as an elongated hole so as to be able to simultaneously blow the inert gas onto all of the linearly consecutive welding required parts 10 (see FIG. 1).

As shown in FIG. 1, the connecting piece 42c of the attachment member 42 has a carrier gas nozzle 43 that blows the carrier gas along the plurality of linearly consecutive welding required parts 10 in the space between the pair of the inert-gas nozzles 41 and 41. On the lifting and lowering member 34 (see FIG. 9), a gas suction duct 44, which sucks the carrier gas that has been blown out from the carrier gas nozzle 43 and has passed through the plurality of welding required parts 10, is provided so as to oppose to the carrier gas nozzle 43.

As shown in FIG. 3, the carrier gas nozzle 43 has the discharge port that is formed to have a horizontally elongated oval shape so as to blow the carrier gas such that the carrier gas fills the space between the pair of the inert-gas nozzles 41 and 41 in a gap between the pair of the inert-gas nozzles 41 and 41. On a lower surface of the carrier gas nozzle 43, a straightening plate 43a that guides the carrier gas, which has been blown out from the carrier gas nozzle 43, so as to flow along the plurality of linearly consecutive welding required parts 10 is provided.

The straightening plate 43a shown in FIG. 1 is a plate material that is attached so as to be parallel to the horizontal lower surface of the carrier gas nozzle 43 such that its tip end project from the discharge port of the carrier gas nozzle 43. The tip end of the straightening plate 43a is bent so as to incline upward. The inclination angle α of the tip end of the straightening plate 43a relative to the horizontal plane is set to an angle between 20 degrees and 60 degrees.

The straightening plate 43a prevents the carrier gas blown out from the carrier gas nozzle 43 from flowing downward and guides the carrier gas so as to flow along the plurality of linearly consecutive welding required parts 10. The straightening plate 43a is configured to be capable of adjusting a flow of the carrier gas, which has been blown out from the carrier gas nozzle 43, such that the carrier gas flows straight in the horizontal direction without being disturbed and is sucked into the gas suction duct 44.

The connecting piece 42c of the attachment member 42 includes, in the vicinity of the emission window 31a through which the laser light from the laser head 31 is emitted, an air nozzle 46 that blows out air in parallel with the carrier gas that has been blown out from the carrier gas nozzle 43. Because the air nozzle 46 has the same structure as the carrier gas nozzle 43, the description thereof is omitted.

Next, a welding method using the laser welding apparatus 20 will be described.

In this embodiment, the welding target workpiece is the stator 11 of the rotating electrical machine shown in FIG. 7, the plurality of coil segments 12 having the wave shape are arranged in the stator core 13 in advance, and the end portions 12a of the plurality of coil segments 12 are welded by the laser welding apparatus 20 so as to achieve electrical conduction. In the following, a specific description will be provided.

First, the stator core 13, in which the coil segments 12 are arranged, is attached to the fixing tool 22. Such attachment is achieved by, as shown in FIG. 6, placing the stator core 13 on the core support plate 22c, and clamping the stator core 13 by the core support plate 22c and the core pressing plate 22e. Subsequently, the pairs of end portions 12a, serving as the welding required parts 10, of the coil segments 12 projecting from the upper part of the stator core 13 are held and fixed by the holding plate 23 as described above.

Next, the fixing tool 22, to which the stator 11 is attached, is attached to the rotating base 24. Such attachment is achieved by, as shown in FIGs. 8 and 9, opening the door 27c of the housing 21 and by installing the base plate 22a of the fixing tool 22 onto the rotating base 24 by respectively inserting the pins 24b of the rotating base 24 into the pin holes 22g in the base plate 22a (see FIG. 6). Subsequently, the door 27c is closed and the welding operation is started. The welding operation is performed by operating the operation panel 28a on the upper main body 28 (see FIG. 8).

When the welding target workpiece is the stator 11, as shown in FIG. 5, the welding required parts 10 (the pairs of end portions 12a) of the coil segments 12 to be welded are arranged in plurality in the radial direction, and the plurality of welding required parts 10 arranged in the radial direction are also arranged in plurality in the circumferential direction. Welding of the welding required parts 10, which are arranged as described above, by using the laser welding apparatus 20 is performed as described below. First, the plurality of welding required parts 10, which are arranged in the radial direction, are successively welded by the laser irradiation device 30. Thereafter, the fixing tool 22 is rotated together with the stator 11, and the succeeding welding required parts 10, which are circumferentially adjacent to the previously welded parts, are positioned below the laser head 31. Then, the plurality of welding required parts 10 arranged in the radial direction, which are located below the laser head 31, are successively welded by the laser irradiation device 30. By repeating such steps, welding of the welding required parts 10 is performed.

As shown in FIG. 1, welding of the plurality of welding required parts 10, which are arranged consecutively in the radial direction, is performed by successively irradiating the laser light by the laser irradiation device 30 to each of the welding required parts 10. At this time, the laser irradiation device 30 successively welds the plurality of welding required parts 10, which are arranged consecutively in the radial direction, by moving the laser light emitted from the laser head 31 in the radial direction of the fixing tool 22 as shown by the dotted arrows in FIG. 1, without moving the laser head 31.

When the plurality of welding required parts 10, which are arranged consecutively in the radial direction, are to be welded, the inert gas is blown out from the inert-gas nozzles 41 to all of the plurality of welding required parts 10, which are arranged consecutively in the radial direction. With this inert gas, oxidation of the end portions 12a of the coil segments 12, which are melted by the irradiation of the laser light, due to contact with oxygen is prevented.

Especially, in this embodiment, as shown in FIGs. 2 and 3, because the inert-gas nozzles 41 are respectively provided on both sides of the plurality of welding required parts 10, which are arranged consecutively in the radial direction, the inert gas is blown out from both sides of the welding required parts 10. With such a configuration, because formation of a region onto which the inert gas is not blown is prevented, the surroundings of the welding required parts 10 (the end portions 12a of the coil segments 12), which are melted by the irradiation of the laser light, are covered with the inert gas, and thereby, it is possible to effectively prevent the oxidation.

At the time of welding, the carrier gas is blown out from the carrier gas nozzle 43, and thereby, as shown by a two-dot chain line arrow in FIG. 1, a gas flow parallel to the welding required parts 10, which are arranged consecutively in the radial direction, is formed. In addition, in the vicinity of the emission window 31a for emitting the laser light, the air is blown out from the air nozzle 46 in parallel with the carrier gas blown out from the carrier gas nozzle 43.

In this state, welding of the plurality of welding required parts 10, which are arranged consecutively in the radial direction, is successively performed from the downstream side of the flow of the carrier gas generated by the carrier gas nozzle 43. A specific description will be given below.

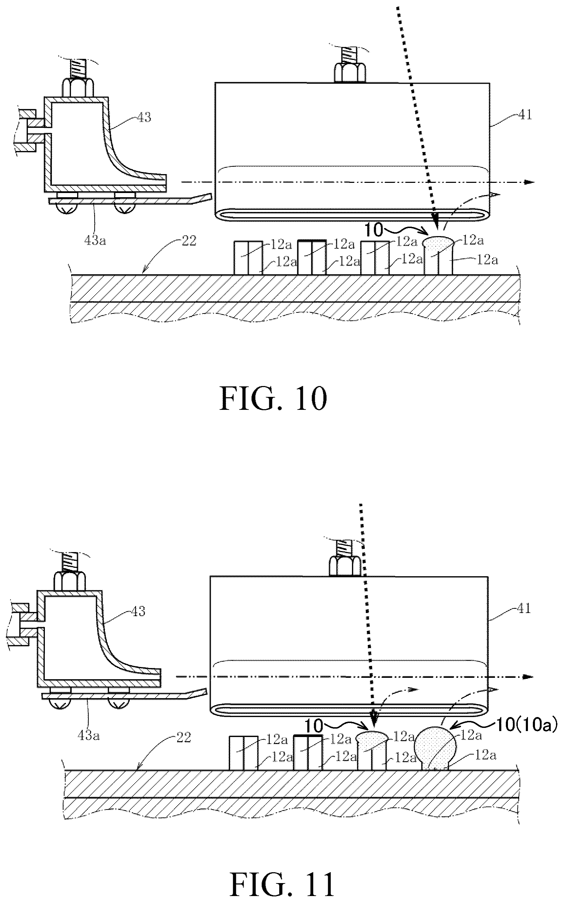

First, as shown in FIG. 10, the welding is performed by irradiating the laser light to the (first) welding required part 10, which is located at the most downstream side of the carrier gas flow. During welding, in which the laser light is irradiated and the end portions 12a of the coil segments 12 are melted, metal vapor is generated from the melting end portions 12a. The metal vapor is guided by the carrier gas flow blown out from the carrier gas nozzle 43 and promptly discharged, together with the inert gas blown out from the inert-gas nozzles 41, to the outside by being sucked into the gas suction duct 44.

Therefore, because the metal vapor generated during welding of the welding required part 10 that is located at the most downstream side is prevented from entering between the laser head 31 and the welding required part 10, the attenuation of the laser light due to entrance of the metal vapor is prevented.

After welding of the welding required part 10 that is located at the most downstream side is finished, as shown in FIG. 11, by changing the emission angle of the laser light emitted through the laser head 31, welding is performed by irradiating the laser light to the succeeding welding required part 10 that is located on the upstream side of a welded part 10a (i.e., the second part from the downstream side of the carrier gas flow). The metal vapor is generated from the end portions 12a of the coil segments 12 that are melted during the most recent irradiation of the laser light. In addition, if cooling of the welded part 10a subjected to welding earlier has not been completed, the metal vapor is also generated from it.

The metal vapor generated from the second welding required part 10, to which the laser light has been irradiated most recently, and from the welded part 10a that is located on the downstream side thereof is guided by the gas flow blown out from the carrier gas nozzle 43 and promptly discharged, together with the inert gas blown out from the inert-gas nozzles 41, to the outside by being sucked into the gas suction duct 44.

Therefore, because the metal vapor generated during welding of the second welding required part 10 is also prevented from entering the space between the laser head 31 and the welding required parts 10, the attenuation of the laser light due to entrance of the metal vapor is prevented.

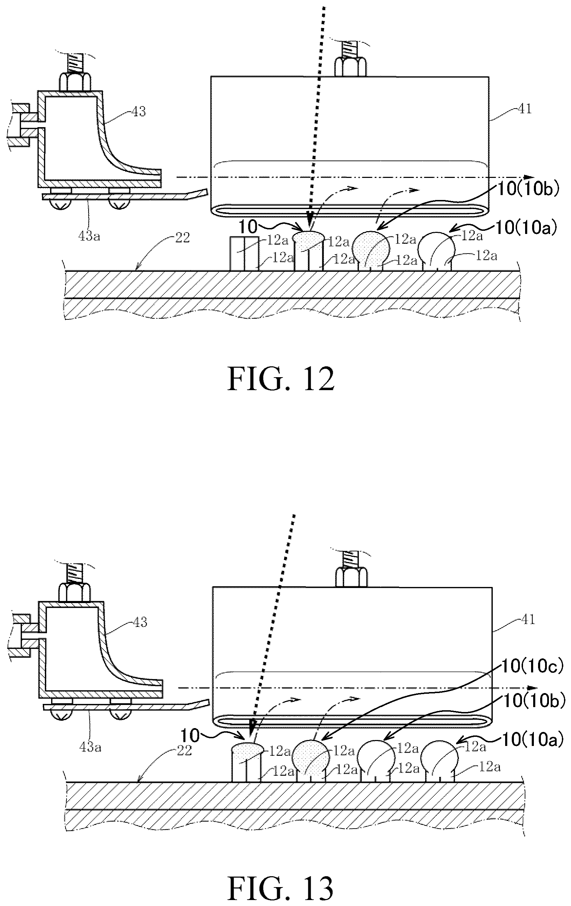

After welding of the second welding required part 10 from the downstream side is finished, as shown in FIG. 12, by changing the emission angle of the laser light emitted through the laser head 31, welding is performed by irradiating the laser light to the succeeding welding required part 10 that is located on the upstream side of a welded part 10b (i.e., the third part from the downstream side of the carrier gas flow). The metal vapor is generated from the end portions 12a of the coil segments 12 that are melted during the most recent irradiation of the laser light. In addition, if cooling of the welded parts 10a and 10b subjected to welding earlier has not been completed, the metal vapor is also generated from them.

The metal vapor generated from the third welding required part 10, to which the laser light has been irradiated most recently, and from the welded parts 10a and 10b that are located on the downstream side thereof is guided by the gas flow blown out from the carrier gas nozzle 43 and promptly discharged, together with the inert gas blown out from the inert-gas nozzles 41, to the outside by being sucked into the gas suction duct 44.

Therefore, because the metal vapor generated during welding of the third welding required part 10 is also prevented from entering the space between the laser head 31 and the welding required parts 10, the attenuation of the laser light due to entrance of the metal vapor is prevented.

After welding of the third welding required parts 10 from the downstream side is finished, as shown in FIG. 13, by changing the emission angle of the laser light emitted through the laser head 31, welding is performed by irradiating the laser light to the succeeding welding required part 10 that is located on the upstream side of a welded part 10c (i.e., the fourth part from the downstream side of the carrier gas flow), that is, in this embodiment, the welding required part 10 that is located at the most upstream side. The metal vapor is generated from the end portions 12a of the coil segments 12 that are melted during the most recent irradiation of the laser light. In addition, if cooling of the welded parts 10a, 10b, and 10c subjected to welding earlier has not been completed, the metal vapor is also generated from them.

The metal vapor generated from the fourth welding required part 10, to which the laser light has been irradiated most recently, and from the welded parts 10a, 10b, and 10c that are located on the downstream side thereof is guided by the gas flow blown out from the carrier gas nozzle 43 and promptly discharged, together with the inert gas blown out from the inert-gas nozzles 41, to the outside by being sucked into the gas suction duct 44.

Therefore, because the metal vapor generated during welding of the (fourth) welding required part 10 that is located at the most upstream side is also prevented from entering the space between the laser head 31 and the welding required parts 10, the attenuation of the laser light due to entrance of the metal vapor is prevented.

As described above, in a case in which welding is performed by successively irradiating the laser light to the plurality of welding required parts 10, the gas flow is generated along the plurality of linearly consecutive welding required parts 10, and the laser light is successively irradiated to the welding required parts 10 from the downstream side toward the upstream side of the gas flow. As a result, it is possible to prevent the metal vapor generated from the welding required parts 10 during welding from entering the space between the laser head 31 and the welding required parts 10.

Therefore, because the laser light is prevented from being irradiated to the metal vapor generated from the welding required parts 10, it is possible to increase welding speed while improving the reliability of welding of the plurality of linearly consecutive welding required parts 10, in other words, the end portions 12a of the coil segments 12.

Because the straightening plate 43a is provided on the carrier gas nozzle 43, it is possible to adjust the flow direction of the carrier gas flow such that the carrier gas does not come into contact with the welding required parts 10. Therefore, the carrier gas blown out from the carrier gas nozzle 43 need not be the inert gas, and a relatively inexpensive gas such as carbon dioxide gas or air can be used.

In addition, because the air nozzle 46 that blows out the air in parallel with the carrier gas blown out from the carrier gas nozzle 43 is provided in the vicinity of the emission window 31a of the laser head 31 through which the laser light is emitted, even if the metal vapor passes over the carrier gas flow during welding, the metal vapor is prevented from approaching the vicinity of the emission window 31a by the air flow. Thus, it is possible to avoid the attenuation of the laser light due to entrance of the metal vapor into the vicinity of the emission window 31a.

After welding of the plurality of welding required parts 10, which are arranged consecutively in the radial direction, is finished, in other words, after welding of the end portions 12a of the coil segments 12 is finished, the succeeding welding required parts 10 circumferentially adjacent to the welded parts, which have been subjected to welding, are positioned below the laser head 31 by rotationally moving the fixing tool 22 together with the stator 11. Then, the plurality of welding required parts 10 arranged in the radial direction, which are now positioned below the laser head 31, are welded successively.

By repeating such operations to perform welding on all of the welding required parts 10 that are arranged consecutively in the radial direction and in the circumferential direction, as shown in FIG. 7, in a state in which the plurality of coil segments 12 are arranged in the stator core 13, the electrical conduction is achieved for the end portions 12a of the coil segments 12, and thereby, a single coil is formed. Thereafter, the stator core 13 is removed from the fixing tool 22, and a series of welding operations is completed.

According to the above-described embodiment, following operational advantages are afforded.

With the laser welding apparatus 20, when welding is performed by successively irradiating the laser light to the plurality of linearly consecutive welding required parts 10, the inert gas is simultaneously blown onto all of the plurality of welding required parts 10 by the inert-gas nozzle 41, and so, it is possible to prevent oxidation of the welding required parts 10 during welding.

In addition, because the inert-gas nozzles 41 are respectively provided on both sides of the plurality of linearly consecutive welding required parts 10 and the inert gas is blown out from both sides of the welding required parts 10, it is possible to prevent the occurrence of the region onto which the inert gas is not blown. As a result, because the surroundings of the welding required parts 10, which are melted by the irradiation of the laser light, are covered with the inert gas, it is possible to effectively prevent oxidation of the welding required parts 10.

In addition, although the metal vapor is generated from the welding required parts 10 during welding, the carrier gas flow is generated by the carrier gas nozzle 43 along the plurality of linearly consecutive welding required parts 10. As a result, the metal vapor generated from the welding required parts 10 during welding is promptly removed, and entrance of the metal vapor into the space between the laser head 31 and the welding required parts 10 is prevented, and so, it is possible to prevent the attenuation of the laser light.

In addition, the air flow is generated by the air nozzle 46 in the vicinity of the emission window 31a of the laser head 31. As a result, even if the metal vapor passes over the carrier gas flow, it is possible to prevent the metal vapor from approaching the vicinity of the emission window 31a through which the laser light is emitted.

As described above, with the laser welding apparatus 20 in this embodiment, it becomes possible to perform rapid welding while preventing oxidation of the welding required parts 10. In a case in which the welding target workpiece is the stator 11 in which the coil segments 12 are mounted in the slots of the stator core 13, the welding required parts 10 are the end portions 12a of the coil segments 12, and there are relatively large number of the welding required parts 10. However, with the laser welding apparatus 20 in this embodiment, it is possible to rapidly perform welding of the end portions 12a of the coil segments 12, and so, it is possible to significantly reduce the manufacturing time of the stator 11 of a rotating electrical machine.

In addition, with the laser welding method in this embodiment, when welding is performed by successively irradiating the laser light to the plurality of welding required parts 10 that are arranged linearly in a consecutive manner, the gas flow is generated along the plurality of welding required parts 10, and the laser light is successively irradiated to the plurality of welding required parts 10 from the downstream side toward the upstream side of the gas flow. As a result, it is possible to prevent attenuation of the laser light due to entrance of the metal vapor generated from the welding required parts 10 during welding into the space between the laser head 31 and the welding required parts 10. Thue, it is possible to improve the reliability of welding while increasing the welding speed.

Embodiments of this invention were described above, but the above embodiments are merely examples of applications of this invention, and the technical scope of this invention is not limited to the specific constitutions of the above embodiments.

This application claims priority based on Japanese Patent Application No.2023-12430 filed with the Japan Patent Office on January 31, 2023, the entire contents of which are incorporated into this specification.

## Claims

1. A laser welding apparatus comprising:
a fixing tool configured to fix a welding target workpiece; and
a laser irradiation device configured to melt welding required parts of the welding target workpiece by laser light emitted from a laser head,
the fixing tool being configured to be capable of fixing the welding target workpiece such that the welding required parts are arranged linearly in plural numbers in a consecutive manner at predetermined intervals, and
the laser irradiation device being configured to successively melt the plurality of welding required parts by changing an emission angle of the laser light emitted from the laser head, wherein
the laser welding apparatus further comprises an inert-gas nozzle configured to simultaneously blow inert gas onto all of the plurality of linearly consecutive welding required parts.

2. The laser welding apparatus according to claim 1, wherein
the inert-gas nozzle is provided on each of both sides of the plurality of linearly consecutive welding required parts.

3. The laser welding apparatus according to claim 2,
further comprising a carrier gas nozzle configured to blow out carrier gas along the plurality of linearly consecutive welding required parts, the carrier gas nozzle being provided between the inert-gas nozzles respectively provided on both sides of the plurality of welding required parts.

4. The laser welding apparatus according to claim 3,
further comprising a gas suction duct configured to suck the carrier gas that has been blown out from the carrier gas nozzle and has passed through the plurality of welding required parts.

5. The laser welding apparatus according to claim 3,
further comprising a straightening plate configured to guide the carrier gas that has blown out from the carrier gas nozzle such that the carrier gas flows along the plurality of linearly consecutive welding required parts.

6. The laser welding apparatus according to claim 3,
further comprising an air nozzle configured to blow out air in parallel with the carrier gas blown out from the carrier gas nozzle, the air nozzle being provided in a vicinity of a laser light emission window of the laser head.

7. The laser welding apparatus according to claim 1, wherein
the welding target workpiece is a stator having a stator core and coil segments mounted in a slot of the stator core, and
the welding required parts are end portions of the coil segments.

8. A laser welding method comprising
a step of welding a plurality of welding required parts arranged linearly in a consecutive manner by successively irradiating laser light to the plurality of welding required parts in a state in which inert gas is simultaneously blown onto all of the plurality of welding required parts.

9. The laser welding method according to claim 8, wherein
a gas flow is generated along the plurality of linearly consecutive welding required parts, and
laser light is successively irradiated to the plurality of linearly consecutive welding required parts from a downstream side toward an upstream side of the gas flow.
